# EUROPEAN PATENT APPLICATION

(11) **EP 1 079 332 A1**
(43) Date of publication of application: **28.02.2001**
(21) Application number: 99202737.5
(22) Date of filing: 25.08.1999
(51) Int. Cl.: G06T 15/00

(54) **Method of rendering states of a system**

(71) Applicant: M.M. Multimedia A/S, 8000 Aarhus C (DK)
(72) Inventor: Morum, Anders, 8000 Aarhus (DK)
(74) Representative: Elmeros, Claus

(57) **Abstract**

The invention relates to a method of rendering states of a system into at least one 2D picture representation (600; 700),
said states being represented as at least one sub-state
said at least one sub-state comprising at least one object (12, 13, 14) and a corresponding viewing method
   each object being defined as having a certain extent in the system,
   said viewing method comprising at least a definition of a viewing orientation of the said object or objects,
at least one of said sub-states being calculated into a 2D sub-picture representation (600, 60; 700, 70),
said 2D sub-picture representation comprising a 2D sub-picture array representation (600; 700) of array elements (6000) and corresponding picture information (60; 70),
said sub-picture information (60; 70) comprising
   viewing method information
   object information
said 2D sub-picture representation being stored in a data base in dependency of the said sub-picture information (60; 70).

The rendering method, according to the invention, provides the possibility of calculating the currently needed sub-picture or reuse of a sub-picture already rendered and stored.

## Description

### Field of the invention

The invention relates to a method of rendering states of a system according to claims 1 and 8, a method of managing sub-picture representation according to claim 10 and a sub-picture representation according to claim 11.

### Background of the invention

The technical field of rendering of graphical images from a certain type of binary representation into a picture on e.g. a monitor has offered several new ways of meeting the ever increasing requirements of the market during recent years. Hence, several considerations have been made before a certain program sequence in progress will provide the desired performance as the trend of computer interfaces points towards increasingly sophisticated images. These images are relatively simple when speaking of more or less static images as those of e.g. a word processor. When turning to more dynamic computer programs such as computer games, simulation programs or the like, the requirements tend to challenge computer programmers and the existing computer hardware has never fully satisfied consumer demands.

One of several problems is that an increasingly sophisticated image requires high speed data processing internally as well as high speed data flow from the computer to the coupled monitor.

When speaking of applications such as computer games, there are basically two fundamental techniques that have been developed: Pre-rendering and real-time rendering.

Basically, the pre-rendering method utilizes specially designed programs for rendering of high quality images. The pre-rendered pictures are subsequently stored specifically to be applied to a certain program.

The pre-rendering offers the advantage of high resolution images but occupies a large amount of memory capacity.

Basically, real-time rendering programs comprise algorithms dynamically to establish the required pictures. Thus, the program sequences have to be contained and distributed within the program itself.

The real-time rendering occupies only a minimum of memory capacity, but the established pictures tend to be too simple and less detailed and the rendered pictures do generally not comply with the desired minimum quality.

It is the object of the invention to provide a method by which high quality pictures may be established by occupying only a minimum of memory capacity.

### Summary of the invention

The invention relates to a method of rendering states of a system into at least one 2D picture representation,
said states being represented as at least one sub-state
said at least one sub-state comprising at least one object and a corresponding viewing method
   each object being defined as having a certain extent in the system,
   said viewing method comprising at least a definition of a viewing orientation of the said object or objects,
at least one of said sub-states being calculated into a 2D sub-picture representation,
said 2D sub-picture representation comprising a 2D sub-picture array representation of array elements and corresponding sub-picture information,
said sub-picture information comprising
   viewing method information
   object information
said 2D sub-picture representation being stored in memory means in dependency of the said sub-picture information, an advantageous rendering method has been obtained.

When a part of the system is mapped into a sub-picture and stored, the smaller sub-pictures may be retrieved later if the specifically stored sub-pictures should be addressed by the system again. Hence, a system changing from one state to another may initially check whether the specific desired sub-picture has been rendered and stored previously. If the sub-picture has already been rendered and stored according to the related information, the pre-rendered sub-picture may be read and a further rendering may be cancelled.

Thus, the rendering method, according to the invention, occupies only a minimum of memory capacity both statically and when transferring the program from one location to another.

Basically, the invention provides the possibility of completely minimized rendering as pictures or increasingly specific sub-pictures are only rendered if the system actually needs the picture or the sub-picture. Moreover, the fractional approach of the invention, i.e. the sub-divisions of the system, increases the possibility of reuse of rendered sub-pictures due to the fact that the possibility of returning to the initial state of the sub-systems are much greater than the possibility of arriving at the initial state of the total picture.

According to the invention, the requirements to the system may be relaxed with respect to processing time and memory as well.

Furthermore, the invention benefits from the fact that some parts of a picture are usually much more time varying than other parts of the picture. Accordingly, more static sub-states may be isolated and the rendering concentrated on the time-varying parts of the picture alone.

It should be noted that the 2D sub-picture representation, according to the invention, may comprise the 2D sub-picture in various ways. Accordingly, the 2D sub-picture may comprise an array of pixels with individual color values.

The rendering method, according to the invention provides the possibility of calculating the currently needed sub-picture or reuse of a sub-picture already rendered and stored.

A data-base, according to the invention, should be understood broadly as a location of storing data of a certain appropriate kind.

It should be noted that a 2D-picture, according to the terminology of the invention, offers two dimensions of a picture. If further dimensions such as smell, feeling or more abstract parameters are included in the picture, the basic understanding would nevertheless regard the pseudo-multidimensional picture as a 2D-picture, according to the invention.

It should be noted that viewing method information and object information should be interpreted very broadly within the scope of the invention, as a sub-picture may be addressed and represented in extremely many ways, still establishing an applicable and sufficient relation to the objects and sub-pictures.

The important information needed is a definition of the individual different sub-pictures and information that discloses the way the sub-picture was made or at least what the sub-picture contains.

When, as stated in claim 2, the said viewing method also comprises lens properties and/or light source(s), a further advantageous embodiment of the invention has been obtained.

Lens and light properties may advantageously contain the needed information when rendering certain kind of systems.

Of course, several other elements may be contained in the viewing method within the scope of the invention.

Moreover, an isometrically flat viewing method and rendering constitutes an advantageous possibility of reuse of sub-pictures, as an object will maintain dimensions irrespective of the distance between the "camera" and the object.

When, as stated in claim 3, the said system is a 3D-system, a further advantageous embodiment of the invention has been obtained, as a 3D-system fully benefits from the geometrically possible simplifications offered according to the method.

When, as stated in claim 4, the said 2D sub-picture array representation comprises array elements, each defining the orientation of a point of a represented system object, an advantageous possibility of reusing sub-picture representations has been obtained.

The sub-picture representation advantageously offers a compressed image representation which may be reused for several different sub-pictures with different light settings.

It should be noted, that the establishment of the shading parameters requires quite heavy processing, while a subsequent conversion of the advanced picture-representation requires much less processing in comparison.

Thus, the representation, according to the invention, offers reuse of the time consuming calculation.

When, as stated in claim 5, the said 2D sub-picture array representation comprises array element, each defining the color of a point of a represented sub-picture, a further advantageous embodiment of the invention has been obtained, as a complete sub-picture ready for monitoring may be read without performing complex rendering algorithms if already stored.

When, as stated in claim 6, the said array element comprises a value or a set of values representing the transparency of a point of a represented object, a very attractive representation of sub-pictures has been obtained, as the sub-picture may provide information needed for natural reproduction of e.g. partly transparent objects of object parts. Moreover, the transparency of a certain array cell of a sub-picture representation provides a very advantageous way of defining the solid borders of the object(s) of a specific sub-state, thus providing a relatively simple and quick subsequent piling of the sub-pictures of a state.

When, as stated in claim 7, the said calculation into a 2D sub-picture representation is performed by means of rendering models such as scan-line converting or preferably ray-tracing, a further advantageous embodiment of the invention has been obtained.

Moreover, the invention relates to a method of rendering states of a system into at least one 2D-picture representation in dependency of sub-picture information as stated in claim 8, according to which the
said states being represented as at least one sub-state, said sub-states being related to corresponding sub-picture information
said method comprising the steps of
reading the sub-picture information corresponding to a given sub-state,
searching a data base of sub-picture representations according to predefined search algorithm and the read sub-picture information,
said sub-picture representations each being defined by corresponding sub-picture information,
reading a sub-picture representation if the corresponding sub-picture information satisfies the said predefined search algorithm,
rendering a sub-picture representation corresponding to the sub-picture information according to the method of claims lto7 if no sub-picture information fulfills the said predefined search algorithm.

According to the above rendering offered by the invention, a very advantageous rendering has been obtained, due to the fact that rendering of a sub-picture implies a search for potential previously identical or sufficiently "look alike" sub-pictures.

When, as stated in claim 9, the said predefined search algorithm initially searches a first data base of sub-pictures being defined by the said sub-picture information,
searching at least one further data base if no sub-picture information of the first data base satisfies the searching algorithm,
reading a sub-picture representation if the corresponding sub-picture information satisfies the said predefined search algorithm,

According to the above embodiment, a step-wise search initially searches for a sufficiently identical sub-picture. If the search result is negative, the step-wise search searches for a more generally applicable search result.

The invention also relates to a method of managing at least one data base comprising sub-picture representations calculated and stored according to claims 1 to 9, as stated in claim 10, wherein sub-picture representations are deleted from the data base(s) if the predefined criteria are fulfilled.

A predefined criteria may for instance be that the sub-picture representation is deleted if the sub-picture representation has not been accessed over a predefined period of time.

The method provides the possibility of optimizing the desired reuse by deleting sub-pictures rarely used. Thus, the storage occupation may be minimized as only "active" sub-pictures are kept on file. Moreover, the overall processing time of rendering is kept at a minimum due to the fact that the amount of sub-pictures to be searched are kept low.

A predefined period may be made up by a number of searches, i.e. activity, or simply a predefined time measure.

Examples of further predefined criteria may be "first in-first deleted" or "least recently used" if the occupied memory reaches a unacceptable size.

Moreover, the invention relates to a sub-picture representation as stated in claim 12 comprising a sub-picture array representation (600) comprising array elements (6000), each defining the orientation of an intersection point (54) of a represented system object (12, 13, 14).

The sub-picture representation advantageously offers a compressed image representation which may be reused for several different sub-pictures with different light settings.

It should be noted that the establishment of the shading parameters requires quite extensive processing, while a subsequent conversion of the advanced picture-representation in comparison requires much less processing.

Thus, the representation, according to the invention, offers reuse of the time consuming calculation.

### The figure

The invention will be described below with reference to the drawings of which
- fig. 1: illustrates the basic understanding of the rendering of a picture according to the invention
- fig.2a - 2c: illustrate the rendering steps of a system in a certain state
- fig.3a - 3c: illustrate the rendering steps of the above system in a new state
- fig.4a - 4c: illustrate the rendering steps of the above system in a new state
- fig.5a - 5c: illustrate the rendering and storing of a sub-picture, according to an embodiment of the invention,
- fig. 6: illustrates a picture-representation of the ray-traced fig. 5c, according to an embodiment of the invention, and
- fig. 7: illustrates an additional picture-representation of the ray-traced fig. 5c, according to another embodiment of the invention.

### Detailed description

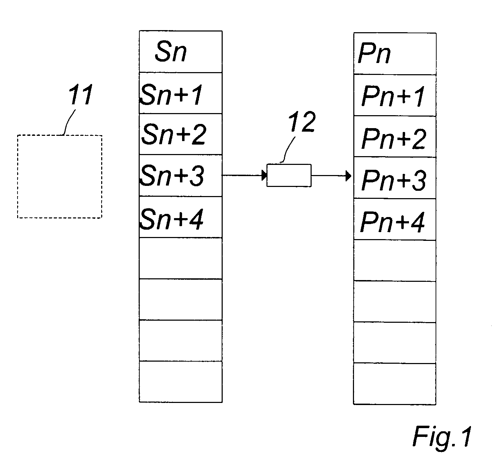

Fig 1 illustrates the basic principles of rendering of a picture according to the invention.

A system 11 established in a computer comprises a set of algorithms which carries out the system changes from state to state when certain requirements are met.

A three-dimensional system (3D) 11 would typically be arranged in a three dimensional Euclid vector space R³ or an affine space having four dimensions.

When establishing the required programming of the system, the system is partitioned in such a way that the system comprises a set of possible subsystems. Consequently, each state is in practice sub-divided into a number of sub-states corresponding to the current state of the system. The sub-division of the various states will be discussed in detail in the following description.

The system may typically be a computer program such as a computer game where the system provides a number of states Sn which are subsequently rendered into a picture Pn and presented on a computer monitor.

The system may also be referred to as a model.

The system may typically be a 3D system but further dimensions may of course be included if appropriate.

When the system is brought from one set of sub-states Sn+2 to another set of sub-states Sn+3 due to the preprogrammed sequences of the computer and the interaction of a user, the sub-states are individually processed and rendered and finally combined and mapped into a picture Pn+3.

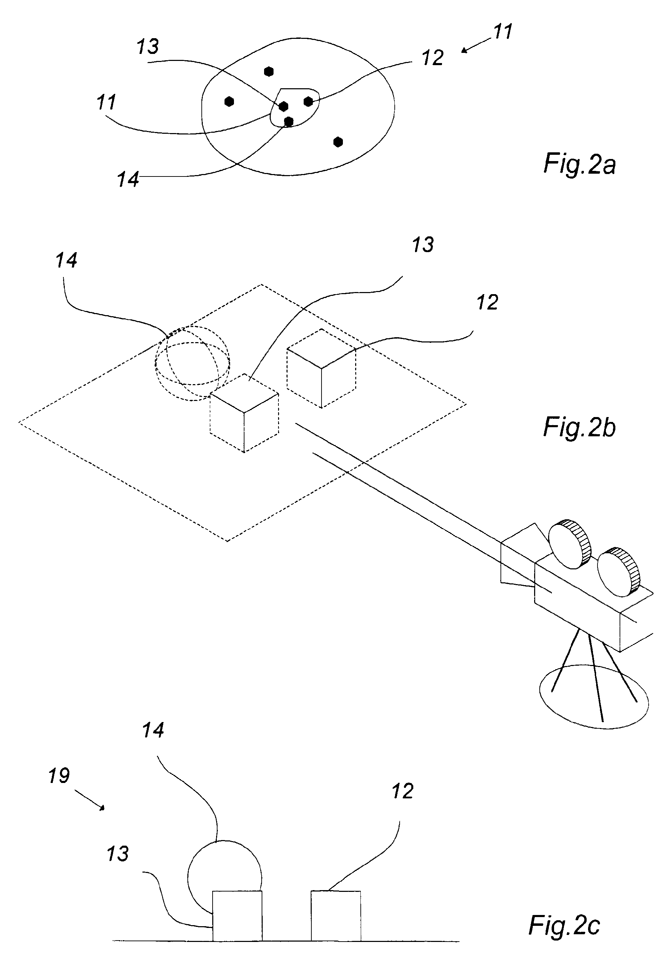

The sub-division of the system is illustrated in detail in figures 2 to 4.

Fig. 2a, 3a and 4a illustrate the basic established system.

Fig. 2b, 3b and 4b respectively illustrate various states of the system.

Fig. 2c, 3c and 4c respectively illustrate the complete, rendered image of a state of the system.

Turning now to fig.2a, the preprogramming has established a system which may act in certain ways under certain conditions. Basically, the present fig. 2a illustrates a system 11 which may contain a number of cubes and a number of spheres 12, 13, 14 that can be arranged and moved on the basis of the programming and the actions via the user interface.

Fig. 2b illustrates a certain state of the system illustrated in fig. 2a comprising two cubes 12, 13 and a sphere 14.

According to the established system, each of the objects 12, 13 and 14 is presented as a sub-system.

When rendering the immaterial state into a picture which may be visually represented to a user under certain conditions, the final, complete image basically depends on two main factors, i.e. the object and the localization of the object itself and on the viewing method.

The object and the localization of the object itself may preferably be determined by the established sub-state alone while the viewing method may be determined separately and processed by the individual states of Sn of the system.

The viewing method may differ significantly from application to application, whereas the important parameters may e.g. be viewing orientation, i.e. camera position with respect to the viewed objects, lens properties, i.e. the degree of perspective or light, i.e. the location of light source or light sources.

Fig. 2c illustrates the complete, rendered picture comprising a 2D image of the cubes 12, 13 and the sphere when the viewing method applies/makes use of isometric viewing (i.e. no perspective) and the camera position is parallel to one of the isometric defining axes.

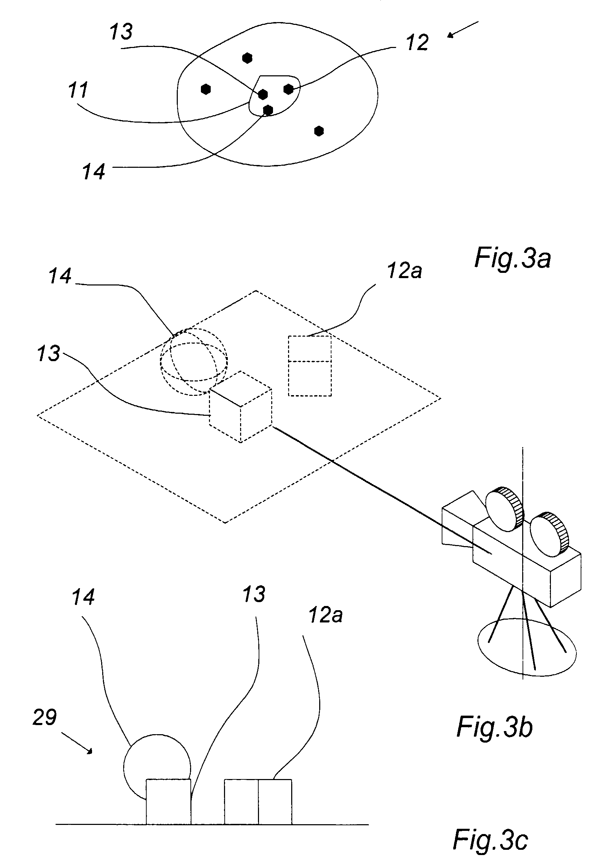

Fig. 3b illustrates a new state of the system 11 in which the objects or sub-states 13 and 14 (the sphere and one of the cubes) are left unchanged, while the processing of the system has generated a 45 degree rotation of the cube 12 to a cube 12a.

When the set of sub-states shown in fig. 3b are rendered according to the chosen viewing method, the rendering method initially checks whether the objects to be rendered have been stored in the image memory. The two objects are unchanged and may of course be reused as both the objects and the viewing method are identical with those previously rendered, while the object 12a has obviously been changed and requires a new rendering.

Subsequently, the complete image of the cube 12a is rendered and stored on the basis of object defining information such as object extent and object orientation. If the viewing method is more complicated, the necessary storing information increases correspondingly.

Subsequently, the final 2D image 29 is established by means of known methods such as ray-tracing and subsequent monitoring at a monitoring device (not shown).

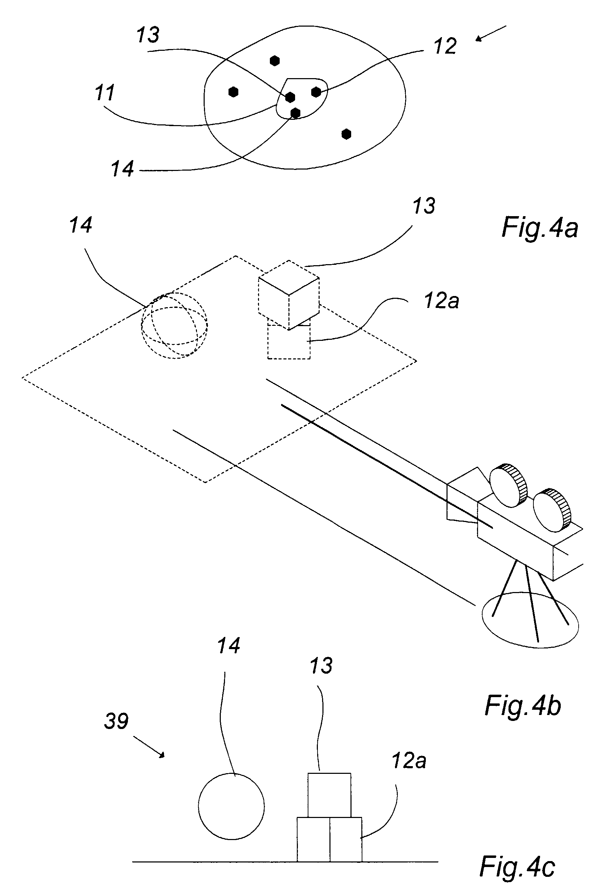

Fig. 4b shows a new state, i.e. a set of sub-states, of the predefined 3D-system of which the location of the cube 13 has been changed.

When the set of sub-states shown in fig. 4b are rendered according to the chosen viewing method, the rendering method initially checks whether the objects to be rendered have been stored in the image memory. The two objects 14, 12a are unchanged and may be reused as both the objects and the viewing method are identical with those previously rendered in fig. 3c, while the object 13a has moved from one location to another.

Moreover, the investigation of the stored images will show that the viewing of a cube directed in the same way as 13a has been rendered previously when the picture of fig. 2c was rendered.

Consequently, all the sub-pictures required in order to establish the complete, rendered picture of fig. 4c may all be fetched in the memory and composed into a final picture.

Thus, the sequence of established pictures 29, 39 and 49 requires only four renderings, i.e. the initial rendering of the cubes 12 and 13 and the sphere of fig. 2b and the rendering of the turned cube of fig. 3b.

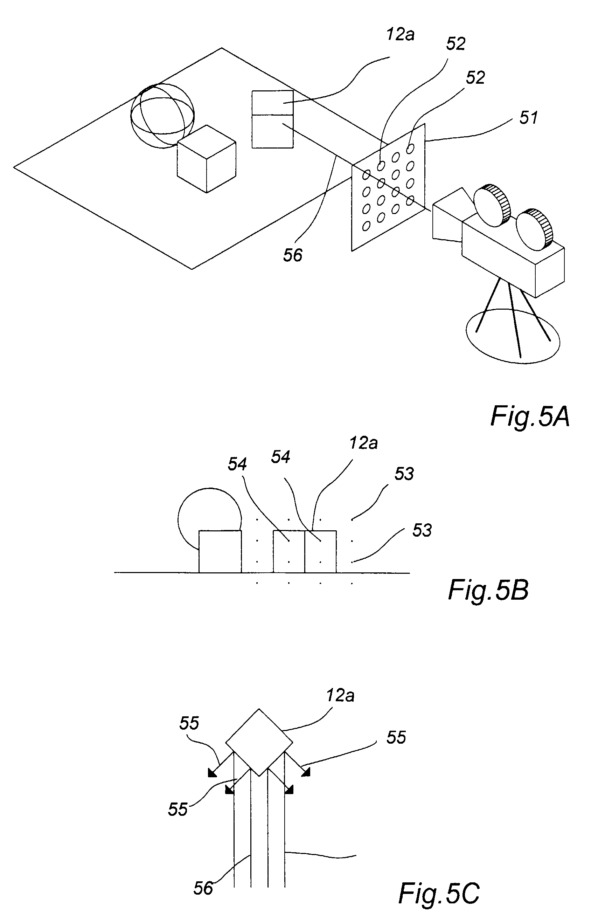

Turning now to fig. 5a-5d, a further embodiment of the invention is illustrated in details.

Fig. 5 illustrates a preferred rendering method, according to the invention, which is somewhat more sophisticated, as one or more light sources are now included in the viewing method.

The basic teaching, according to the illustrated embodiment of the invention, is that a certain rendered sub-picture is established and stored as a kind of preliminary image of the complete and presented picture.

According the illustrated embodiment of the invention, it is a fundamental assumption that the rendering of the comprised objects of a state of the system disregards any kind of mutual shadow effect between the objects. Thus, the rendering of shadows is restricted to comprise only the "first order shadow", i.e. only the shadow established according to the orientation of the light source (or sources) of the system with respect to the specifically rendered object and the color of the light source and the object.

Renderings established according to this assumption have turned out to provide pictures with a satisfactory degree of naturalness and quality.

Moreover, the above assumption has provided the possibility of rendering and storing pre-stage pictures instead of a final rendered bitmap table.

Fig. 5a illustrates the above-described rendering of the object 12a by means of a traditional ray-tracing method.

Other kinds of rendering methods such as scan-line converting may be applicable.

The resolution of the established sub-picture may vary according to the specific current requirements, while the illustrated object 12a is represented in a 4x4 matrix as illustrated by a plane 51 having perforations 52 defining the locations of the fired rays. The illustrated ray 56 intersects the object 12a, and a value matching the hit is established.

Fig. 5b and fig. 5C illustrates the 4x4 ray tracing of the object 12a.

When registering an intersection point, an orthogonal unitary vector 55 is established at the specific point. The normal 55 is reflecting the orientation of the intersected surface. If no intersections 53 are established, a predefined value is applied to the ray-traced picture element.

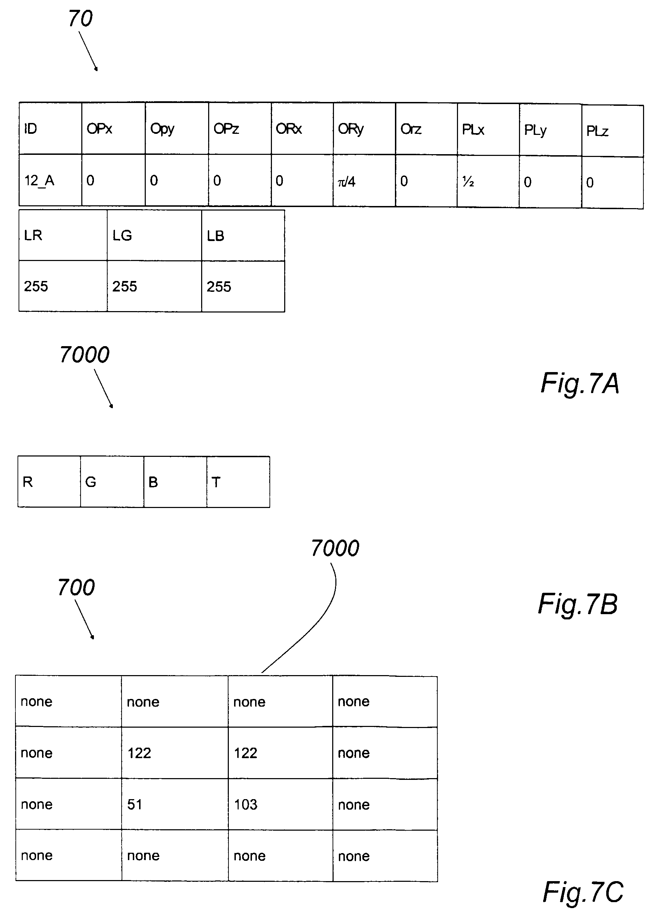

According to traditional rendering, the orientation would be compared to the orientation of the light source of the model, and a final pixel value would be established according to the color of the hit object surface, the color of the light and the mutual angle between the normal surface and the light source. This traditional approach will be explained in detail in fig 7A to 7C.

According the present embodiment of the invention, each intersection is represented by a value representing the orientation of the traced surface.

Similarly, the complete sub-picture established according to the described ray-tracing method is made up by a minimum of three dimensions.

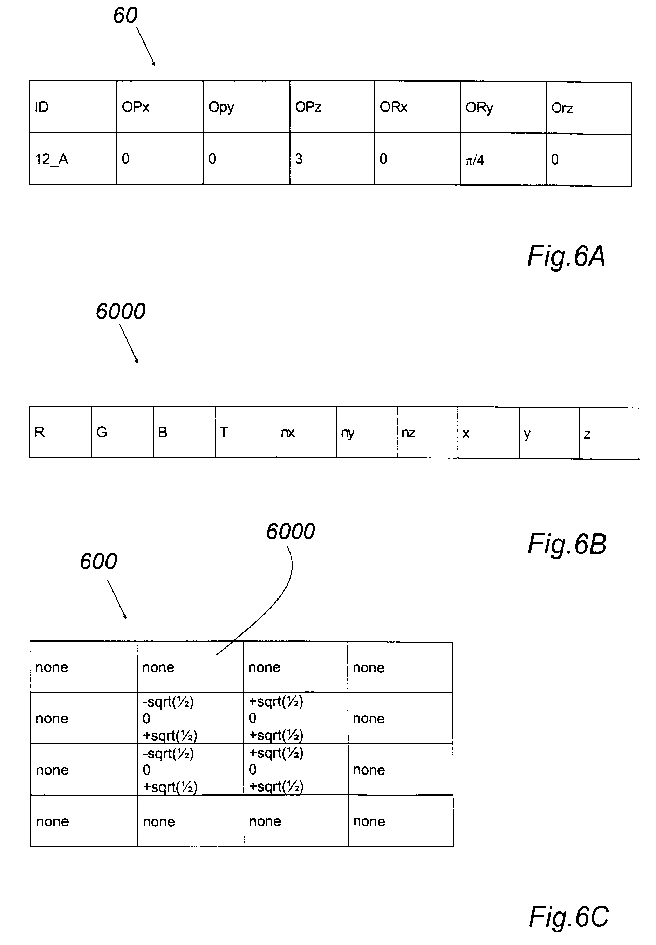

Fig. 6 shows an advanced picture array representation 600 containing the object 12a as a number of multi-dimensional pixels, each being defined by surface-orientation. The four central intersections 54 of fig. 5b are represented by the vectors (-sqrt(½),0,+sqrt(½)),(-sqrt(½),0,+sqrt(½)),(sqrt(½),0,+sqrt(½)) and (sqrt(½),0,+sqrt(½)), the first two representing the two left hits of the object 12a and the last two representing the two right hits.

It should be noted that a surface-orientation may be established in several different variants or derive from orthogonal representation within the scope of the invention, such as tangential representation.

A "no-hit" may be represented in several ways as shown below.

The established array of intersections is subsequently stored in the memory along with information defining the size and the rotation of the rendered object 12a.

Each sub-picture array representation 600, according to the present embodiment, is related to sub-picture information 60 comprising an ID=12_A determining the object(s) contained in the sub-state. Typically, a sub-state would contain only one object, but a sub-state may of course comprise several bundled objects.

In addition, the sub-picture information 60 contains the vector Opx, Opy, and Opz = 0, 0, 3 determining the position of the object 12_A according to the current chosen coordinates relative to the virtual camera.

Finally, the viewing method defines the rotation of the object 12_A as Orx, Ory, Orz = 0, π/4, 0.

According to the illustration of fig. 6, each cell in an advanced sub-picture representation may contain or point to a color, transparency factor, and an orthogonal unitary vector, i.e. a cell format 6000 having seven components R, G, B, T, x, y, z. R, G, and B in combination determine the color of the intersection point. A transparency factor of zero determines an absolutely non-transparent intersection point, while a transparency factor of 255 determines an absolutely transparent intersection.

Assuming now that the object 12a is red and non-transparent, the second row, column two of the sub-picture illustrated will thus be presented as 255, 0, 0, 0,-sqrt(½), 0, +sqrt(½).

The cells containing the short notation "none" would accordingly be represented as a 255, 0, 255, 255, 0, 0, 0, of which the combination 255, 0, 255 represents a "none intersection". It should be noted that the combination 255, 0, 255 is the color cyan which will rarely occur in a real color, according to the present embodiment. Thus, cyan has been chosen to always determine a non-intersection. The fourth component having the value 255 determines the degree of transparency. According to the shown embodiment, 255 determines absolute invisibility, while 0 determines an absolutely solid and non-transparent intersection.

It should be noted that no pixels of a final picture have been generated yet, and it should be emphasized in particular that the represented color of the four central cells solely represents the color of the object to be rendered. The influence of light sources has not been observed yet.

The illustrated advanced sub-picture representation 600 is subsequently stored in suitable storage means such as a data base in dependency of the sub-picture information 60.

When the advanced sub-picture representation 60 of fig. 6 is finally completely rendered by means of a suitable algorithm, each of the cells 6000 of the array 60 (or at least the cells determining intersections) has to be converted into a specific pixel value with a certain color.

Each completed pixel of the object 12a is established by comparison of the surface orientations and the orientation of the light source of the system or states with respect the object 12a. Several methods may be applicable within the scope of the invention.

Turning now to fig. 7, the complete, rendered sub-picture may be stored according to specific sub-picture information 70 determining both orientation of the objects, position with respect to the camera and the current setting of light, i.e. orientation of light source and color of the light. It should be noted that the sub-picture information 70 addressing a final picture comprises other information parameters than the sub-picture information addressing the advanced picture representation.

Each sub-picture array representation 700, according to the present embodiment, is related to sub-picture information 70 comprising an ID=12_A determining the object(s) contained in the sub-state. Typically, a sub-state would contain only one object, but a sub-state may of course comprise several bundled objects.

In addition, The sub-picture information 70 contains the vector Opx, Opy, and Opz = 0, 0, 3 determining the position of the object 12_A according to the current chosen coordinates relative to the virtual camera.

The viewing method defines the rotation of the object 12_A as Orx, Ory, Orz = 0, π/4, 0.

Moreover, the sub-picture information format contains the position of a point light source, being located slightly to the right with respect the camera as PLx, Ply, PLz = ½, 0, 0.

Finally, the sub-picture information format contains source color information such as LR, LG, LB. LR, LG, LB has been set to 255, 255, 255, defining a white light source.

According to the illustration of fig. 7, each cell 7000 of a sub-picture array representation 700 may contain or point to a color and transparency factor, i.e. a cell format 7000 having only four components R, G, B, T.

R, G, and B in combination determine the color of the intersection point. A transparency factor of zero determines an absolutely non-transparent intersection point, while a transparency factor of 255 determined an absolutely transparent intersection.

It should be noted that the array elements have now finally been established as a specific color of a certain intersection point of a represented object being subject to a certain lighting as defined by sub-picture information 70 LR, LG, LB.

Assuming now that the object 12a is red and non-transparent, the contents of the cells (2, 2), (2, 3); (3, 2) and (3, 3) represented according to the illustrated format (R, G, B, T) are (64, 0, 0, 0), (51, 0, 0, 0), (64, 0, 0, 0) and (51, 0, 0, 0)

The cells containing the short notation "none" would accordingly be represented as a 255, 0, 255, 255.

Finally, the established picture is layered upon the final global 2D picture, and the picture is now ready to be displayed on a computer monitor by means of known graphical processing means as illustrated in fig. 3C.

Next time a rendering algorithm searches the memory for a pre-rendered sub-picture having certain defined objects, the above-stored complete, rendered 2D sub-picture representation 700 may be read if the stored pictures match the sub-picture information searched for. If the sub-picture matches only with respect to the sub-picture information in other respects than the light orientation and the color of the light, an advanced sub-picture representation 600 may be retrieved and processed as described above in order to obtain the final picture which may subsequently be stored and displayed.

It should be noted that the advanced sub-picture representation described above facilitates reuse of an established object despite the fact that the light source orientation has been changed.

It should, moreover, be noted that storage of advanced sub-pictures may be combined with complete, rendered objects remembering, of course, that the advanced sub-pictures have to be processed prior to final establishment of the pixels in a picture.

In spite of the necessity of further processing of the read and stored advanced sub-representation, the method may advantageously be utilized for a reduction of the processing time and occupation of memory due to the fact that the stored format represents extremely time consuming data, while the final establishment of the individual pixels occupies less system resources.

Moreover, the reuse of established advanced sub-pictures reduces the need for re-rendering of objects significantly, as each stored and advanced sub-picture may subsequently fit into any picture irrespective of light orientation. Thus, time consuming shading may be reduced to a minimum.

It should be noted that an important condition, according to the present embodiment of the invention, is that every object only invokes shadows on the state "casing", i.e. floor, walls etc. Hence, if ray-tracing has determined the solid contours of objects with a certain orientation, the basic outline will remain irrespective of the light setting.

It should moreover be noted that a rendering algorithm may apply different strategies depending on the type of the object or sub-state to be rendered. Thus, convex polygons or structures may advantageously be represented by means of advanced sub-picture representation, while concave structures should preferably be represented as a traditional bitmap in some instances.

According to the invention, an individual handling of each of the objects may be applied.

Finally, it should be emphasized that the format of the sub-picture information may vary significantly within the scope of the invention. Thus, colors may not only be represented as combinations of the three RGB components but e.g. also as one-byte compressed color representations. Likewise, other supplementary parameters such as intensity or other suitable supplementary sub-picture determining parameters may be applicable.

Likewise, the picture cell representation may be applied in several variants.

## Claims

1. Method of rendering states of a system into at least one 2D picture representation (600; 700),
said states being represented as at least one sub-state
said at least one sub-state comprising at least one object (12, 13, 14) and a corresponding viewing method
each object being defined as having a certain extent in the system,
said viewing method comprising at least a definition of a viewing orientation of the said object or objects,
at least one of said sub-states being calculated into a 2D sub-picture representation,
said 2D sub-picture representation comprising a 2D sub-picture array representation (600; 700) of array elements (6000) and corresponding sub-picture information (60; 70),
said sub-picture information (60; 70) comprising
viewing method information (OPx, Opy, Opz; Orx, Ory, Orz)
object information (ID)
said 2D sub-picture representation being stored in memory means in dependency of the said sub-picture information (60; 70).

2. Method of rendering states according to claim 1, wherein said viewing method further comprises lens properties and/or light source(s) ( PLx, Ply, PLz; LR, LG, LB).

3. Method of rendering states according to claim 1 or 2, wherein the said system is a 3D-system.

4. Method of rendering states according to claims 1 to 3, wherein the said 2D sub-picture array representation (600) comprises array elements (6000), each defining the orientation of a point (54) of a represented system object.

5. Method of rendering states according to claims 1 to 4, wherein the said 2D sub-picture array representation (700) comprises an array element (7000), each defining the color of a point (54) of a represented system object (12, 13, 14).

6. Method of rendering states according to claims 1 to 5, wherein the said array element (6000; 7000) comprises a value or a set of values representing the transparency of a point of a represented system object.

7. Method of rendering states according to claims 1 to 6, wherein the said calculation into a 2D sub-picture representation is performed by means rendering models such as scan-line converting or preferably ray-tracing.

8. Method of rendering states of a system into at least one 2D picture representation,
said states being represented as at least one sub-state, said sub-states being related to corresponding sub-picture information (60; 70)
said method comprising the steps of
reading the sub-picture information (60; 70) corresponding to a given sub-state,
searching a data base of sub-picture representations (600; 700) according to a predefined search algorithm and the read sub-picture information (60; 70),
said sub-picture representations (600; 700) being defined by corresponding sub-picture information (60; 70),
reading a sub-picture representation (600; 700) if the corresponding sub-picture information (60; 70) satisfies the said predefined search algorithm,
rendering a sub-picture representation corresponding to the sub-picture (60; 70) according to the method of claims 1 to 7 if no sub-picture information fulfills the said predefined search algorithm.

9. Method of rendering states of a system according to claim 8, wherein the said predefined search algorithm initially searches a first data base of sub-pictures being defined by the said sub-picture information (70),
searching at least one further data base () if no sub-picture information of the first data base satisfies the searching algorithm,
reading a sub-picture representation (600) if the corresponding sub-picture information (60) satisfies the said predefined search algorithm,

10. Method of managing at least one data base comprising sub-picture representations, wherein sub-picture representations are deleted from the data base(s) if the predefined criteria are fulfilled.

11. Method of managing at least one data base according to claim 10, wherein
the sub-picture representation has not been accessed over a predefined period.

12. A sub-picture representation comprising a sub-picture array representation (600) comprising array elements (6000), each defining the orientation of a point (54) of a represented system object (12, 13, 14).

13. A sub-picture representation according to claim 12, wherein said array elements comprises a color.
